(19) Europäisches Patentamt / European Patent Office / Office européen des brevets

(11) **EP 4 296 903 A1**

(12) **EUROPEAN PATENT APPLICATION**
published in accordance with Art. 153(4) EPC

(43) Date of publication:
**27.12.2023 Bulletin 2023/52**

(21) Application number: **22755845.9**

(22) Date of filing: **25.01.2022**

(51) International Patent Classification (IPC):
**G06N 3/063** (2023.01)   **G06F 7/533** (2006.01)

(52) Cooperative Patent Classification (CPC):
**G06F 7/533; G06N 3/063**

(86) International application number:
**PCT/JP2022/002493**

(87) International publication number:
**WO 2022/176521 (25.08.2022 Gazette 2022/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.02.2021 JP 2021023619**

(71) Applicant: **Sony Group Corporation**
**Tokyo 108-0075 (JP)**

(72) Inventors:
• **SAKUMA, Yuiko**
**Tokyo 108-0075 (JP)**
• **SUMIHIRO, Hiroshi**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING METHOD, AND INFORMATION PROCESSING PROGRAM**

(57)   An information processing apparatus (10, 10A, and 10B) includes a calculation unit (120, 120A, and 120B) that performs integration of an input value and a weight coefficient. Any one of the input value and the weight coefficient is expressed by a combination of addition or subtraction of n or less first bit strings. The first bit strings include one bit of 1.

## FIG.3

EP 4 296 903 A1

**Description**

Field

The present disclosure relates to an information processing apparatus, an information processing method, and an information processing program.

Background

In recent years, a neural network which is a mathematical model imitating a mechanism of a cranial nervous system has attracted attention. Furthermore, a deep neural network (DNN) in which a neural network supports deep learning to deepen a network hierarchy is known.
Although achieving a high recognition rate by increasing the number of coefficients, the DNN has a large calculation amount. Thus, various methods for reducing a processing load of calculation on the DNN have been proposed. For example, Non Patent Literature 1 discloses a method of reducing a processing load by approximating a coefficient using logarithmic calculation.

Citation List

Non Patent Literature

Non Patent Literature 1: Daisuke Miyashita, and two others, "Convolutional Neural Networks using Logarithmic Data Representation", [online], March 3, 2016, arXiv, [searched on February 1, 2021], Internet <URL: https://arxiv.org/pdf/1603.01025.pdf> Summary

Technical Problem

In the method disclosed in Non Patent Literature 1, however, coefficients close to zero are densely expressed, but coefficients close to the maximum value are sparsely expressed. Therefore, the recognition rate of the DNN may decrease.
Therefore, the present disclosure proposes a mechanism capable of reducing the decrease in a recognition rate of the DNN while inhibiting a processing load.
Note that the above-described problem or object is merely one of a plurality of problems or objects that can be solved or achieved by a plurality of embodiments disclosed in the present specification.

Solution to Problem

According to the present disclosure, an information processing apparatus is provided. The information processing apparatus includes a calculation unit that performs integration of an input value and a weight coefficient. Any one of the input value and the weight coefficient is expressed by a combination of addition or subtraction of n or less first bit strings. The first bit strings include one bit of 1.

Brief Description of Drawings

FIG. 1 illustrates an outline of one example of a DNN.
FIG. 2 illustrates one example of DNN calculation.
FIG. 3 illustrates bit expression according to proposed technology of the present disclosure.
FIG. 4 illustrates calculation using the bit expression according to the proposed technology of the present disclosure.
FIG. 5 is a block diagram illustrating a functional configuration example of an information processing apparatus according to a first embodiment of the present disclosure.
FIG. 6 illustrates a configuration example of a calculation unit according to the first embodiment of the present disclosure.
FIG. 7 illustrates an example of a pseudo code of an "n-hot" quantization learning algorithm according to the first embodiment of the present disclosure.
FIG. 8 is a flowchart illustrating one example of conversion processing according to the first embodiment of the present disclosure.

FIG. 9 illustrates "n-hot" conversion processing according to the first embodiment of the present disclosure.

FIG. 10 is a table illustrating one example of conversion processing in a conversion processing unit according to the first embodiment of the present disclosure.

FIG. 11 is a graph illustrating an approximation result obtained by performing conversion processing according a comparative example.

FIG. 12 is a graph illustrating an approximation result obtained by performing conversion processing according a comparative example.

FIG. 13 is a graph illustrating an approximation result obtained by performing the conversion processing according to the first embodiment of the present disclosure.

FIG. 14 illustrates one example of the conversion processing according to the first embodiment of the present disclosure.

FIG. 15 illustrates reduction in a calculation amount in the conversion processing according to the first embodiment of the present disclosure.

FIG. 16 is a block diagram illustrating a functional configuration example of an information processing apparatus according to a second embodiment of the present disclosure.

FIG. 17 illustrates a configuration example of a calculation unit according to the second embodiment of the present disclosure.

FIG. 18 is a block diagram illustrating a functional configuration example of an information processing apparatus according to a third embodiment of the present disclosure.

FIG. 19 illustrates a configuration example of a calculation unit according to the third embodiment of the present disclosure.

FIG. 20 is a block diagram illustrating a hardware configuration example of the information processing apparatus according to the technology of the present disclosure.

Description of Embodiments

Embodiments of the present disclosure will be described in detail below with reference to the accompanying drawings. Note that, in the present specification and the drawings, components having substantially the same functional configuration are denoted by the same reference signs, and redundant description thereof will be omitted.

One or a plurality of embodiments (including examples and variations) described below can be implemented independently. In contrast, at least a part of the plurality of embodiments described below may be appropriately combined with at least a part of other embodiments and implemented. The plurality of embodiments may include different novel features. Therefore, the plurality of embodiments may contribute to solving different objects or problems, and may exhibit different effects.

Note that the description will be given in the following order.

1. Outline of Present Disclosure

    1.1. Background
    1.2. Outline of Proposed Technology

2. First Embodiment

    2.1. Configuration Example of Information Processing Apparatus
    2.2. Configuration Example of Calculation Unit
    2.3. Algorithm Example
    2.4. Conversion Processing
    2.5. Effects

3. Second Embodiment
4. Third Embodiment
5. Hardware Configuration Example
6. Conclusion

<<1. Outline of Present Disclosure>>

<1.1. Background>

The technology according to the present embodiments relates to a DNN. The DNN is a neural network to which deep learning is applied.

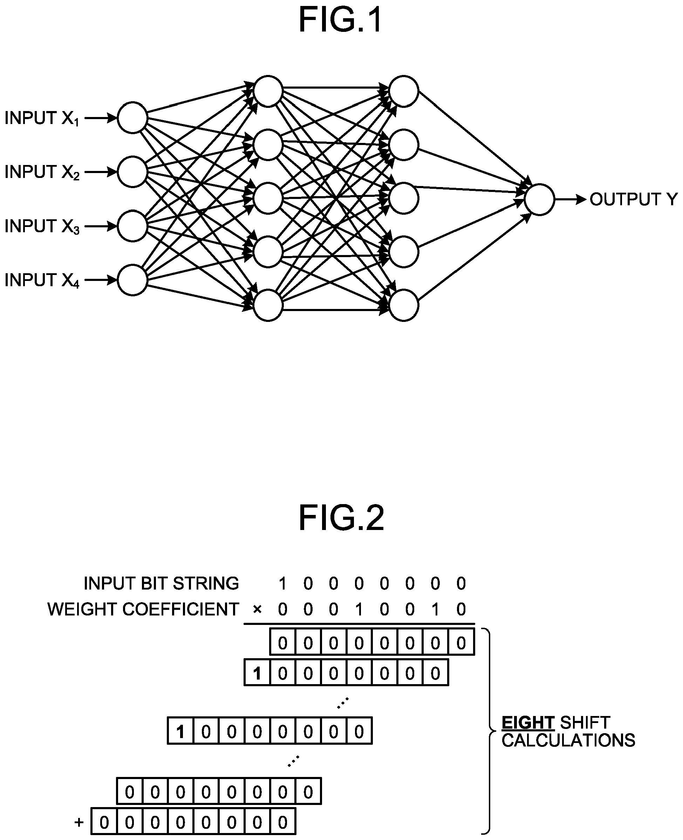

FIG. 1 illustrates an outline of one example of the DNN. The DNN in FIG. 1 includes at least an input layer, a hidden layer (intermediate layer), and an output layer, and, that is, hierarchically executes calculation processing. Note that, as illustrated in FIG. 1, not only one but a plurality of hidden layers may be included in stages. In other words, the DNN may include an input layer, a plurality of hidden layers (intermediate layers), and an output layer.

Then, in the DNN, a plurality of inputs (input data) $X_1$, $X_2$, ..., and $X_m$ (m = 4 in FIG. 1) are input to the input layer. Next, the respective pieces of input data $X_1$, $X_2$, ..., and $X_m$ are weighted by different predetermined weight coefficients and integrated to be values of respective nodes of the hidden layer. Moreover, similarly, the values of respective nodes of the hidden layer are weighted by different predetermined weight coefficients and integrated to be outputs (output data) Y of the output layer.

That is, in the example of the DNN in FIG. 1, the calculation is hierarchically and repeatedly executed so that (unidirectional) data propagates from the input layer to the output layer via the hidden layer.

While a learning method using such a DNN has high accuracy, a heavy processing load according to the calculation is added. A calculation method of effectively reducing the processing load is thus required. In particular, since an edge terminal having an edge/computing function has limited processing capability and memory capacity, it is difficult to perform conventional DNN processing. Reduction in a DNN calculation amount is required.

Therefore, in recent years, for example, in Reference [1], the number of bits of coefficients is reduced by 8-bit fixed-point quantization to reduce the calculation amount.

Furthermore, for example, in a DNN calculation in hardware, a large calculation cost of multiplication of coefficients and activations is imposed. Specifically, at the time of a multiplication calculation, each coefficient bit is shifted, and the resulting value is added. Therefore, when 8-bit quantization is performed, eight shift calculations are performed.

FIG. 2 illustrates one example of the DNN calculation. As illustrated in FIG. 2, in the DNN calculation, multiplication of an input bit string (activation), which is input data, and a weight coefficient is performed.

Specifically, as illustrated in FIG. 2, the multiplication of the input bit string and the weight coefficient is performed by shift calculations for each bit of the weight coefficient and addition of a value after the shift calculation. Therefore, eight shift calculations are performed in the multiplication of an input bit string of eight bits and a weight coefficient of eight bits.

Here, in order to inhibit the number of times of shift calculations, for example, power-of-two quantization of a coefficient is used in References [2] and [3] and Non Patent Literature 1. In the power-of-two quantization, the number of times of shift calculations is reduced to one by expressing a coefficient with a value of $2^n$. Only a small number of values, however, can be expressed by the power-of-two quantization, which degrades accuracy.

Non Patent Literature 1 and Reference [3] propose an approximation method using logarithmic calculation. In the methods of Non Patent Literature 1 and Reference [3], however, coefficients near zero are densely expressed, but values expressed near the maximum value are sparsely expressed, which may degrade recognition accuracy of the DNN.

Therefore, for example, Reference [4] proposes a method of optimizing a base value of quantization. In a normal power-of-two quantization, the base value of quantization is two, but, in Reference [4], values of $2^{1/2}$ and $2^{1/4}$ are used to adjust the distribution of quantization values.

In any of the methods of References [2] to [4] and Non Patent Literature 1, values in a specific range are densely expressed while there is a region having sparse expressible values. Therefore, in Reference [5], the number of times of shift calculations is mitigated as compared with that in the power-of-two quantization expression in References [2] to [4] and Non Patent Literature 1 to improve the distribution of values of coefficients that can be expressed by n times of additions. In Reference [5], the number of times of shift calculations is controlled by a maximum value n of the number of "1" in coefficient bits. Unfortunately, there is a problem of low memory efficiency due to addition of values having a plurality of base values.

(References)

[1] Vanhoucke, V., Senior, A., & Mao, M. Z. (2011). Improving the speed of neural networks on CPUs.

[2] Zhou, A., Yao, A., Guo, Y., Xu, L., & Chen, Y. (2017). Incremental network quantization: Towards lossless cnns with low-precision weights. arXiv preprint arXiv:1702.03044.

[3] Lee, E. H., Miyashita, D., Chai, E., Murmann, B., & Wong, S. S. (2017, March). Lognet: Energy-efficient neural networks using logarithmic computation. In 2017 IEEE International Conference on Acoustics, Speech and Signal Processing (ICASSP) (pp. 5900-5904). IEEE.

[4] Vogel, S., Liang, M., Guntoro, A., Stechele, W., & Ascheid, G. (2018, November). Efficient hardware acceleration of cnns using logarithmic data representation with arbitrary log-base. In Proceedings of the International Conference on Computer-Aided Design (pp. 1-8).

[5] Li, Y., Dong, X., & Wang, W. (2019, September). Additive Powers-of-Two Quantization: An Efficient Non-uniform Discretization for Neural Networks. In International Conference on Learning Representations.

<1.2. Outline of Proposed Technology>

As described above, it is required to further reduce a DNN calculation amount while inhibiting degradation in recognition accuracy of the DNN. Therefore, in the proposed technology of the present disclosure, one of an input bit string (input value) and a weight coefficient is expressed by a combination of addition and subtraction of the first bit strings including one "1", so that the DNN calculation amount is reduced as compared with that in a normal quantization expression while the degradation in recognition accuracy of the DNN is inhibited. In order to simplify description, a case where a weight coefficient is expressed by the first bit string will be described below.

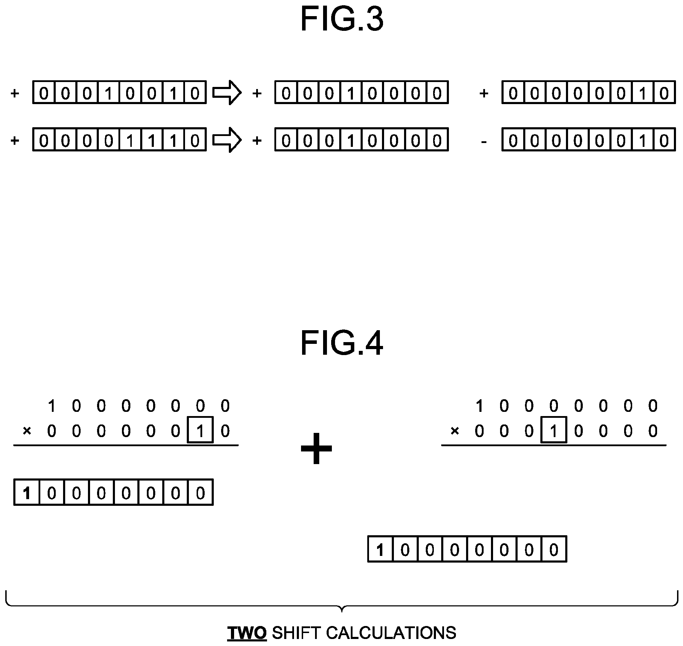

FIG. 3 illustrates bit expression according to the proposed technology of the present disclosure. As illustrated in FIG. 3, in the proposed technology of the present disclosure, for example, a weight coefficient of "00010010" is expressed by addition of "00010000" and "00000010".

Furthermore, in the proposed technology of the present disclosure, for example, a weight coefficient of "00001110" is expressed by subtraction of "00000010" from "00010000".

As described above, in the proposed technology of the present disclosure, the weight coefficient is expressed by addition or subtraction of n (n = 2 in FIG. 3) or less first bit strings including one "1". This further reduces a DNN calculation amount while inhibiting degradation in recognition accuracy of the DNN.

FIG. 4 illustrates calculation using the bit expression according to the proposed technology of the present disclosure.

FIG. 4 illustrates a case where a weight coefficient of "00010010" is expressed by addition of two first bit strings ("00010000" and "00000010").

As illustrated in FIG. 4, multiplication of "100000000", which is input data, and "00010010", which is a weight coefficient, can be decomposed into multiplication of the input data and the first bit string by using the proposed technology of the present disclosure.

Since a first bit string includes one "1", one shift calculation is required to be performed in accordance with a location of "one" of the first bit string in the multiplication of the input data and the first bit string.

Therefore, the number of times of shift calculations performed in the multiplication of the input data and the weight coefficient can be reduced to n (n = 2 in FIG. 4) times by using the bit expression according to the proposed technology of the present disclosure.

Furthermore, as described above, in the proposed technology of the present disclosure, a weight coefficient is expressed by addition or subtraction of first bit strings. As described above, a weight coefficient is decomposed by using not only addition but subtraction and expressed. This increases the number of weight coefficients that can be expressed by n first bit strings, and can reduce degradation in recognition accuracy of the DNN. Note that expression of a bit string with n first bit strings is also hereinafter referred to as "n-hot" expression. Furthermore, a quantization value represented by the "n-hot" expression is also referred to as an "n-hot" quantization value.

Note that, although, in the above-described example, a case of n = 2 has been described, n may be 3 or more. For example, a set Pb obtained by combining a power-of-two quantization value of b bits and "0" is represented by Expression (1) below. Furthermore, the maximum value of the magnitude of a weight coefficient (one example of bit string) is set to $\alpha$. That is, the weight coefficient has a value of $[\alpha, -\alpha]$.

$$P_b \in X = \left\{2^0, 2^{-1}, 2^{-2}, ..., 2^{-(b-1)}, 0\right\} \qquad \cdots (1)$$

In this case, an "n-hot" quantization value $Q_{n\text{-}hot}(\alpha, b, n)$ is expressed by Expression (2) below.

$$Q_{n-hot}(\alpha, b, n) = $$
$$\alpha \sum_{i=1}^{n} \{(-1)^{c_i} P_{b,i} \mid P_{b,i} \in X, P_{b,1} < P_{b,2}, ... < P_{b,n}, c_i \in \{0, 1\}\} \qquad \cdots (2)$$

For example, an example of the "n-hot" quantization value in the case of n = 2 is represented by Expression (3) below.

$$Q_{n-hot}\left(\alpha,\ b,\ n = 2\right) =$$

$$\alpha[[\{P_{b,1} + P_{b,2}\} \cup \{P_{b,2} - P_{b,1}\}] \cup [\{-(P_{b,1} + P_{b,2})\} \cup \{-(P_{b,2} - P_{b,1})\}]]$$

$$\cdots (3)$$

Note that, in Expression (3), the sum set of $\{P_{b,\ 1} + P_{b,\ 2}\}$ and $\{P_{b2} - P_{b1}\}$ has a positive value, and the sum set of $\{-(P_{b,\ 1} + P_{b,\ 2})\}$ and $\{-(P_{b2} - P_{b1})\}$ has a negative value.

<<2. First Embodiment>>

<2.1. Configuration Example of Information Processing Apparatus>

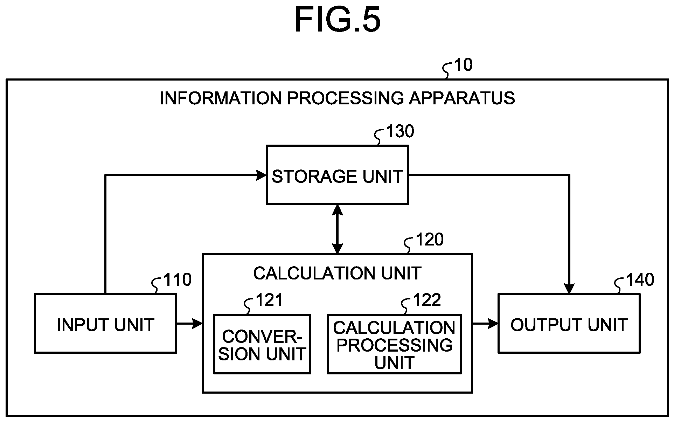

Next, an information processing apparatus 10 according to a first embodiment of the present disclosure will be described. FIG. 5 is a block diagram illustrating a functional configuration example of the information processing apparatus 10 according to the first embodiment of the present disclosure. The information processing apparatus 10 in FIG. 5 includes an input unit 110, a calculation unit 120, a storage unit 130, and an output unit 140.

(Input Unit 110)

The input unit 110 has a function of detecting various input operations from an operator. For this purpose, the input unit 110 may include various devices for detecting input operations from the operator. The input unit 110 can be implemented by, for example, various buttons, a keyboard, a touch panel, a mouse, a switch, and the like.

(Calculation Unit 120)

The calculation unit 120 the calculation unit 120 has a function of calculating an output value by performing an inner product calculation based on a plurality of input values and a plurality of weight coefficients corresponding to the input values. In particular, the calculation unit 120 performs an inner product calculation related to forward propagation of a neural network.

The calculation unit 120 in FIG. 5 includes a conversion unit 121 and a calculation processing unit 122. The conversion unit 121 converts a weight coefficient into an "n-hot" quantization value. Converting a weight coefficient into "n-hot" quantization is also hereinafter referred to as "n-hot" conversion.

The calculation processing unit 122 calculates the weight coefficient converted into an "n-hot" expression by the conversion unit 121 and an input value, and outputs a calculation result. Details of the calculation unit 120 will be described later.

(Storage Unit 130)

The storage unit 130 has a function of storing programs, data, and the like used in each configuration of the information processing apparatus 10. The storage unit 130 stores, for example, various parameters used in the neural network.

(Output Unit 140)

The output unit 140 has a function of outputting various pieces of information to the operator. For this purpose, the output unit 140 may include a display device that outputs visual information. Here, the above-described display device can be implemented by, for example, a cathode ray tube (CRT) display device, a liquid crystal display (LCD) device, an organic light emitting diode (OLED) device, or the like.

The functional configuration example of the information processing apparatus 10 according to the first embodiment of the present disclosure has been described above. Note that the above-described functional configuration example is merely one example, and the functional configuration example is not limited to such an example. The information processing apparatus 10 may further include a configuration other than that in FIG. 5. The information processing apparatus 10 may further include, for example, a communication unit that performs information communication with another information processing terminal. That is, the functional configuration of the information processing apparatus 10 according to the first embodiment of the present disclosure can be flexibly redesigned.

<2.2. Configuration Example of Calculation Unit>

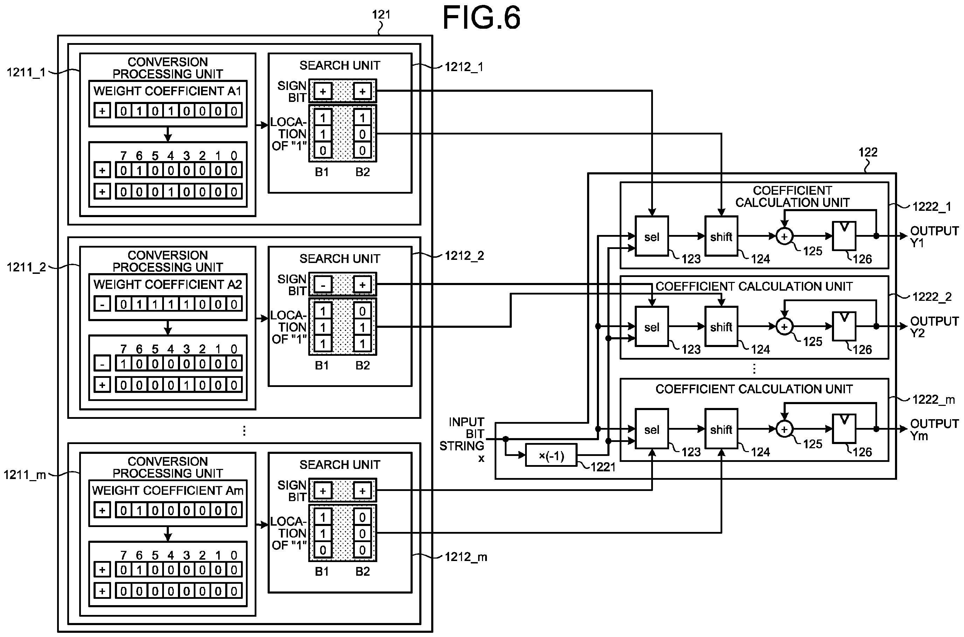

FIG. 6 illustrates a configuration example of the calculation unit 120 according to the first embodiment of the present disclosure. Although, for example, configuration in which multiplication of weight coefficients A1, ..., and Am and an input bit string x among calculations performed in a node of the neural network is performed to obtain outputs Y1, ..., and Ym will be described here, integration performed in the neural network can be executed in a similar configuration.

As described above, the calculation unit 120 includes the conversion unit 121 and the calculation processing unit 122.

[Conversion Unit 121]

The conversion unit 121 in FIG. 6 includes conversion processing units 1211_1 to 1211_m and search units 1212_1 to 1212_m in the number corresponding to the number of weight coefficients to be calculated.

(Conversion Processing Unit 1211)

The conversion processing unit 1211 performs "n-hot" conversion on a weight coefficient A, and expresses the weight coefficient A with n (n = 2 in FIG. 6) first bit strings having one "1" bit.

For example, in the example of FIG. 6, the conversion processing unit 1211_1 expresses "+01010000", which is the weight coefficient A1, with "+01000000" and "+00010000". Furthermore, the conversion processing unit 1211_2 expresses "-01111000", which is the weight coefficient A2, with "-10000000" and "+00001000". Furthermore, the conversion processing unit 1211_m expresses "+01000000", which is the weight coefficient Am, with "+01000000" and "+00000000".

As described above, the weight coefficient A can have a positive value and a negative value. Furthermore, the conversion processing unit 1211 converts the weight coefficient A into an expression ("n-hot" expression) obtained by addition or subtraction of n or less first bit strings.

(Search Unit 1212)

The search unit 1212 searches the n or less first bit strings obtained by performing "n-hot" conversion on the weight coefficient A for a sign bit and a location of "1" in the first bit strings. Here, since n = 2 holds, the first first bit string is referred to as a bit string B1, and the second first bit string is referred to as a bit string B2 for distinction.

For example, the search unit 1212 1 searches the bit string B1 "+01000000", and detects a sign bit "+" and the location of "1" in the bit string B1. In this case, the search unit 1212_1 detects that the location of "1" in the bit string B1 is the seventh from the LSB. Similarly, the search unit 1212_1 searches the bit string B2 "+00010000", and detects that the sign bit "+" and the location of "1" in the bit string B2 are the fifth from the LSB.

The search unit 1212 outputs information indicating the detected sign bit and information indicating the location of "1" in the bit string B1 to the calculation processing unit 122.

For example, the search unit 1212 1 outputs a signal indicating that the sign bit of the bit string B1 is "+" and a bit string "110" indicating the location of "1" to the calculation processing unit 122 at a predetermined time t1. Furthermore, the search unit 1212_1 outputs a signal indicating that the sign bit of the bit string B2 is "+" and a bit string "100" indicating the location of "1" to the calculation processing unit 122 at a time t2 next to the predetermined time t1.

[Calculation Processing Unit 122]

The calculation processing unit 122 in FIG. 6 includes a sign inversion unit 1221 and coefficient calculation units 1222 1 to 1222 m in the number corresponding to the number of weight coefficients to be calculated.

(Sign Inversion Unit 1221)

The sign inversion unit 1221 has a function of inverting the sign of the input bit string x. For example, when an input bit string x having a positive value is input, the sign inversion unit 1221 generates a sign inverted input bit string x (-1) inverted to a negative value, and outputs the sign inverted input bit string x (-1) to a coefficient calculation unit 1222. Furthermore, for example, when an input bit string x having a negative value is input, the sign inversion unit 1221 generates a sign inverted input bit string x (-1) inverted to a positive value, and outputs the sign inverted input bit string x (-1) to the coefficient calculation unit 1222.

(Coefficient Calculation Unit 1222)

The coefficient calculation unit 1222 performs multiplication of an input bit string x and the weight coefficient A1, and outputs output Y, which is a multiplication result. The coefficient calculation unit 1222 includes a selection unit 123, a shift calculation unit 124, an addition unit 125, and a delay unit 126.

The selection unit 123 selects one of the input bit string x and the sign inverted input bit string x (-1) in accordance with a signal indicating a sign bit output from the search unit 1212. The selection unit 123 the selection unit 123 selects one of the input bit string x and the sign inverted input bit string x (-1) in accordance with signs of the bit strings B1 and B2. The selection unit 123 selects the input bit string x when the bit strings B1 and B2 have positive signs, and selects the sign inverted input bit string x (-1) when the bit strings B1 and B2 have negative signs. The selection unit 123 outputs the selected bit string to the shift calculation unit 124.

The shift calculation unit 124 shifts the bit string (input bit string x or sign inverted input bit string x (-1)) output by the selection unit 123 by a shift amount in accordance with the location of "1" output by the search unit 1212.

For example, in FIG. 6, when a signal related to the bit string B1 of the weight coefficient A1 is input to the coefficient calculation unit 1222_1 at the time t1, the selection unit 123 selects the input bit string x, and the shift calculation unit 124 generates a shift signal obtained by shifting the input bit string x by seven bits. This causes the coefficient calculation unit 1222_1 to perform integration of the input bit string x and the bit string B1.

Furthermore, when a signal related to the bit string B2 of the weight coefficient A1 is input to the coefficient calculation unit 1222_1 at the time t2, the selection unit 123 selects the input bit string x, and the shift calculation unit 124 generates a shift signal obtained by shifting the input bit string x by five bits. This causes the coefficient calculation unit 1222_1 to perform integration of the input bit string x and the bit string B2.

The addition unit 125 adds output of the shift calculation unit 124 and output of the delay unit 126. The delay unit 126 holds output of the addition unit 125, and outputs the held output Y to the addition unit 125 at the next time (clock). That is, the addition unit 125 adds output of the shift calculation unit 124 at the current time to output Y at the previous time to generate output Y.

For example, in FIG. 6, the addition unit 125 adds a shift signal shifted by the shift calculation unit 124 at the time t1 and a shift signal shifted by the shift calculation unit 124 at the time t2, and outputs the result serving as output Y1 from the coefficient calculation unit 1222 1. That is, the integration result of the input bit string x and the bit string B1 and the integration result of the input bit string x and the bit string B2 are added, and the result is output from the coefficient calculation unit 1222_1 as output Y1.

Here, for example, when the above-described selection unit 123 selects the sign inverted input bit string x (-1), the addition unit 125 adds a result obtained by the shift calculation unit 124 performing shift calculation on the sign inverted input bit string x (-1). This is the same as the fact that the addition unit 125 subtracts a shift calculation result of the input bit string x. As described above, the selection unit 123 selects any one of the input bit string x and the sign inverted input bit string x (-1), so that the addition unit 125 adds or subtracts the shift calculation result. As described above, the addition unit 125 can also be said to be an addition/subtraction processing unit that performs any processing of addition and subtraction in accordance with a selection result of the selection unit 123.

This allows the coefficient calculation unit 1222 to perform multiplication of the weight coefficient A and the input bit string x by two shift calculations, so that the number of times of shift calculations can be reduced. Furthermore, the reduction in the number of times of shift calculations can reduce a calculation circuit, and can inhibit an increase in circuit scale.

<2.3. Algorithm Example>

Although a case where the above-described calculation unit 120 calculates the weight coefficient A subjected to the "n-hot" quantization by a circuit has been described, the calculation unit 120 can calculate the weight coefficient A subjected to the "n-hot" quantization by software. Therefore, a calculation of the weight coefficient A subjected to the "n-hot" quantization by software, that is, an "n-hot" quantization learning algorithm will be described.

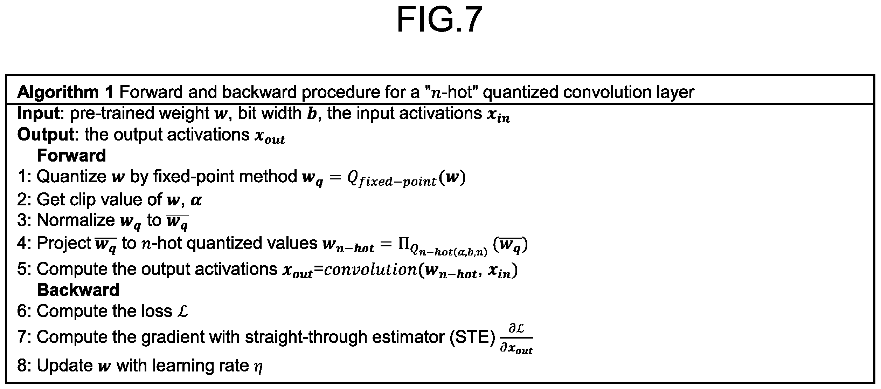

FIG. 7 illustrates an example of a pseudo code of an "n-hot" quantization learning algorithm according to the first embodiment of the present disclosure.

A pseudo code Algorithm1 in FIG. 7 indicates processing of forward propagation and backward propagation during relearning of "n-hot" quantization according to the first embodiment of the present disclosure.

Note that symbols included in the pseudo code Algorithm1 are defined as follows.

Table 1

| $\Pi_{Q_{n\text{-hot}(\alpha,\,b,\,n)}}(x)$ | Project x to quantization value $Q_{n\text{-hot}(\alpha,\,b,\,n)}$ |
|---|---|
| $Q_{\text{fixed-point}}(x)$ | Quantize x with normal fixed point quantization [1] |

As illustrated in FIG. 7, in the forward propagation processing, Step 4 of projecting a weight coefficient to an "n-hot" value is executed before processing of calculating output activation, so that relearning of a coefficient using the "n-hot" quantization can be performed.

<2.4. Conversion Processing>

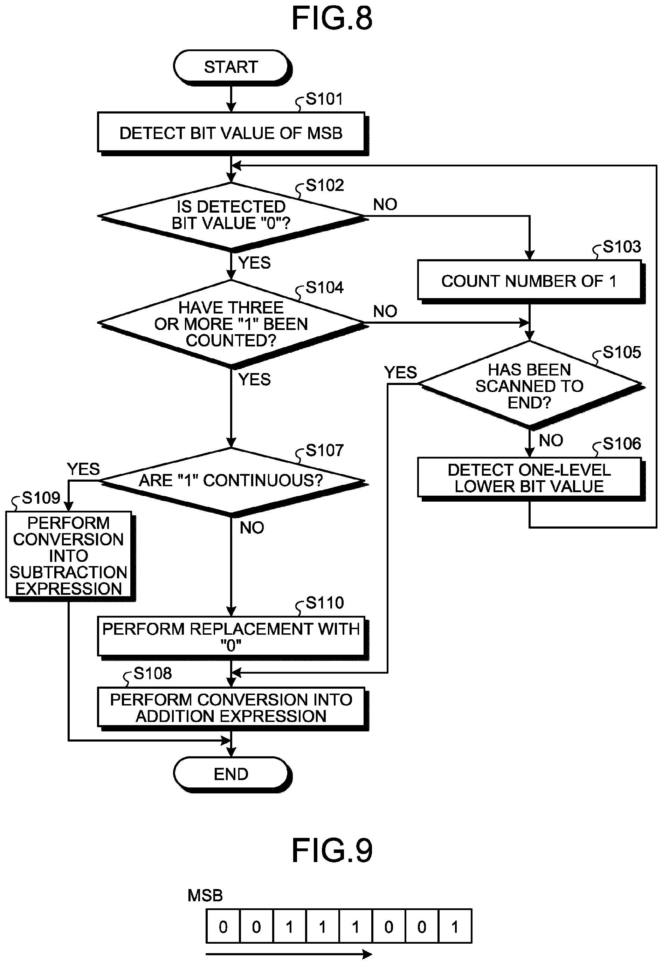

Next, processing of conversion into an "n-hot" expression according to the first embodiment of the present disclosure will be described. FIG. 8 is a flowchart illustrating one example of conversion processing according to the first embodiment of the present disclosure. The conversion processing in FIG. 8 is performed by, for example, the conversion processing unit 1211 as preprocessing of calculation processing of the weight coefficient A and the input bit string x.

The conversion processing unit 1211 scans a bit string which is the weight coefficient A in order from an MSB. Therefore, the conversion processing unit 1211 first detects a bit value of the MSB (Step S101). The conversion processing unit 1211 determines whether or not the detected bit value is "0". (Step S102).

When the detected bit value is not "0", that is, when the detected bit value is "1" (Step S102; No), the conversion processing unit 1211 increases the number of "1" by one (Step S103), and proceeds to Step S105. That is, the conversion processing unit 1211 counts the number of "1", and proceeds to Step S107.

When the detected bit is "0" (Step S102; Yes), the conversion processing unit 1211 determines whether or not three or more "1" have been counted so far (Step S104). When less than three "1" have been counted (Step S104; No), the conversion processing unit 1211 determines whether or not the bit string which is the weight coefficient A has been scanned to the end (Step S105).

When the bit string has not been scanned to the end (Step S105; No), the conversion processing unit 1211 detects a one-level lower bit value of the bit string (Step S106), and returns to Step S102.

In contrast, when it is determined in Step S104 that three or more "1" have been counted (Step S104; Yes), the conversion processing unit 1211 determines whether or not "1" are continuous (Step S107).

When "1" are not continuous (Step S107; No), the conversion processing unit 1211 replaces "1" included in the bit string with "0" (Step S110), and converts the weight coefficient A into an "n-hot" quantization value of an addition expression (Step S108). When "1" are continuous (Step S107; Yes), the conversion processing unit 1211 converts the weight coefficient A into an "n-hot" quantization value of a subtraction expression (Step S109), and ends the processing.

This allows the conversion processing unit 1211 to convert the weight coefficient into an "n-hot" expression of addition or subtraction, and can further reduce the calculation amount while inhibiting degradation in accuracy due to the conversion of the weight coefficient.

Here, the above-described conversion processing will be described with reference to an example of a case where the conversion processing unit 1211 performs the "n-hot" quantization on the bit string in FIG. 9. FIG. 9 illustrates "n-hot" conversion processing according to the first embodiment of the present disclosure.

As illustrated in FIG. 9, when the conversion processing unit 1211 performs the "n-hot" conversion processing on a bit string "00111001", the conversion processing unit 1211 first detects a bit value of an MSB. In the example of FIG. 9, the bit value of the MSB is "0", so that the conversion processing unit 1211 detects a one-level lower bit value. As described above, the conversion processing unit 1211 scans the bit strings in order from the MSB until "1" is detected.

In the example of FIG. 9, the conversion processing unit 1211 detects "1" at the second bit from the MSB. When detecting "1", the conversion processing unit 1211 scans the bit string while counting the number of "1" until "0" is detected thereafter.

The conversion processing unit 1211 detects "0" at the fifth bit from the MSB. The conversion processing unit 1211 determines whether or not three or more "1" have been counted. In the example of FIG. 9, three "1" have been counted, so that the conversion processing unit 1211 determines that three or more "1" have been counted.

Subsequently, the conversion processing unit 1211 determines whether or not the detected "1" are continuous. When "1" are continuous, the conversion processing unit 1211 performs an "n-hot" conversion on the bit string by subtraction. When "1" are not continuous, the conversion processing unit 1211 performs the "n-hot" conversion on the bit string by addition.

In the example of FIG. 9, the counted "1" are continuous, the conversion processing unit 1211 performs an "n-hot" conversion on the bit string "00111001" by subtraction of two first bit strings. More specifically, the conversion processing unit 1211 converts the bit string "00111001" into "01000000" - "00001000".

In the conversion processing described above with reference to FIG. 9, the conversion processing unit 1211 converts the bit string "00111001" into "01000000" - "00001000". Here, "01000000" - "00001000" are "00111000", and are not completely the same as the original bit string "00111001".

As described above, there is a bit string that is not expressed in the "n-hot" expression according to the technology of the present disclosure. In the first embodiment of the present disclosure, such a bit string is projected to, for example, the closest bit string, and is expressed by an "n-hot" quantization value. Examples of the projection method include rounding up, rounding down, and rounding to the closest value.

For example, when the conversion processing unit 1211 is implemented by a circuit (hardware), it is considered that the circuit scale of the conversion processing unit 1211 can be further reduced by selecting rounding up or rounding down as a projection method. Furthermore, when the conversion processing unit 1211 is implemented by software, it is considered that conversion accuracy can be further improved by performing rounding to the closest value.

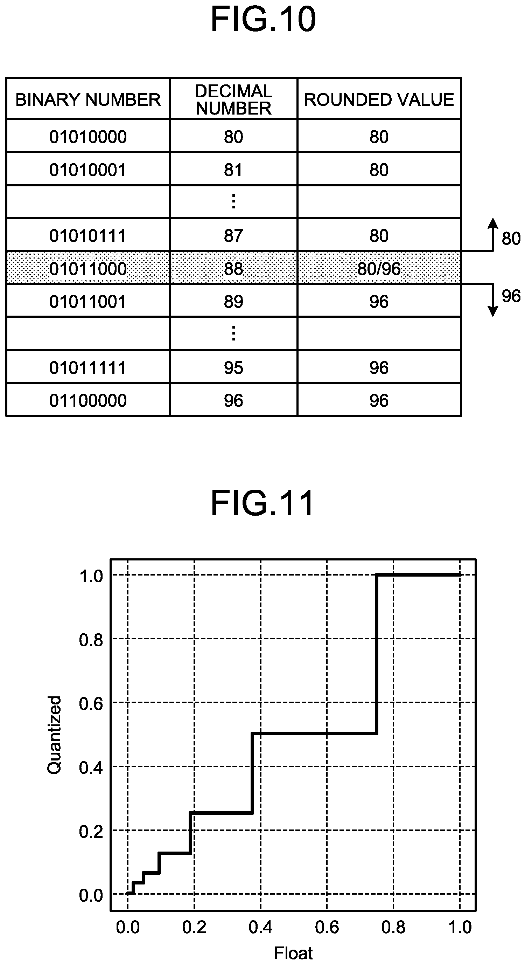

FIG. 10 is a table illustrating one example of conversion processing in the conversion processing unit 1211 according to the first embodiment of the present disclosure. FIG. 10 illustrates a case where a bit string not expressed by the "n-hot" expression according to the technology of the present disclosure is rounded to the closest value.

FIG. 10 illustrates a binary number value expressed by eight bits, a decimal number value, and a rounded value obtained by rounding a value not expressed by the "n-hot" expression in association with each other. Note that the rounded value is indicated by a decimal number.

A value between "81" and "95" in the decimal number cannot be expressed by the "n-hot" expression. Therefore, as illustrated in FIG. 10, the conversion processing unit 1211 rounds "81" to "95" to the closest value "80" or "96", and converts the value obtained by the rounding (rounded value) into an "n-hot" expression. For example, the conversion processing unit 1211 rounds "81" to "87" into "80", and rounds "89" to "95" into "96". Here, "88" may be rounded to either "80" or "95".

<2.5. Effects>

As described above, in the conversion processing according to the first embodiment of the present disclosure, there is a value not expressed by an "n-hot" expression. In the conversion processing according to the first embodiment of the present disclosure, however, the conversion processing unit 1211 performs conversion processing by using not only addition but subtraction. This can further inhibit degradation in accuracy due to the conversion processing.

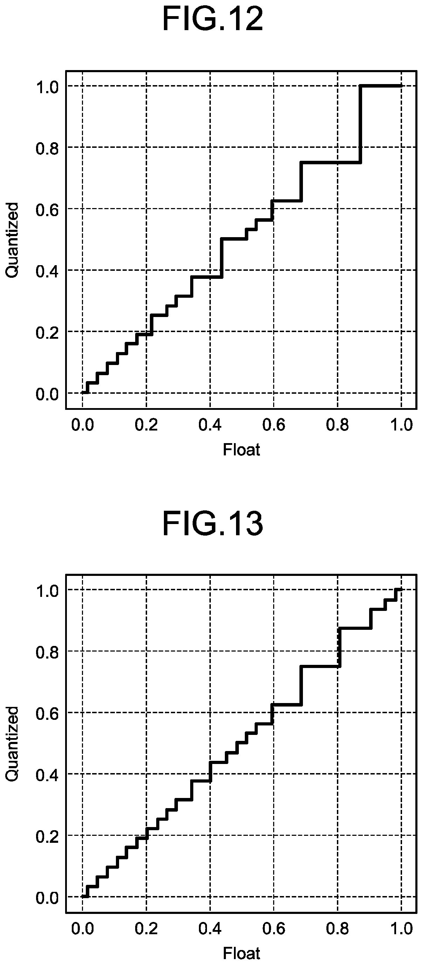

This point will be described with reference to FIGS. 11 to 13. FIGS. 11 and 12 are graphs illustrating approximation results obtained by performing conversion processing according to comparative examples. FIG. 13 is a graph illustrating an approximation result obtained by performing the conversion processing according to the first embodiment of the present disclosure.

In a comparative example in FIG. 11, n = 1, that is, a weight coefficient A of five bits is expressed by one first bit string. Furthermore, in a comparative example in FIG. 12, only addition of n = 2, that is, a weight coefficient A of five bits is expressed by addition of two first bit strings. In the example in FIG. 13, addition and subtraction of n = 2, that is, a weight coefficient A of five bits is expressed by addition or subtraction of two first bit strings.

Note that, in the examples of FIGS. 11 to 13, approximation results in a case where values that cannot be expressed are rounded to the closest value are illustrated. In FIGS. 11 to 13, the horizontal axes represent a weight coefficient A before conversion, and the vertical axes represent a weight coefficient A after conversion.

As illustrated in FIG. 11, when a weight coefficient A is converted (approximated) with n = 1, it can be seen that a conversion result has a large error. As described above, in the example of n = 1, the weight coefficient A after conversion includes a large error, which may degrade accuracy in recognition of a neural network.

As illustrated in FIG. 12, when the weight coefficient A is converted by addition of n = 2, the error is smaller than that in a case of n = 1, but a larger value of the weight coefficient A causes a larger error. As described above, even in the case of n = 2, the weight coefficient A after conversion using only addition includes a large error, which may degrade accuracy in recognition of a neural network.

In contrast, as illustrated in FIG. 13, when the weight coefficient A is converted by using not only addition but subtraction of n = 2, the error included in the conversion result can be made smaller than that in a case where the conversion is performed by using only addition.

As described above, the conversion processing according to the first embodiment of the present disclosure can further reduce the error included in the conversion result. In particular, in the conversion processing according to the present embodiment, an error in a case of a large value of the weight coefficient A can be made smaller than that in a case where only addition is performed. Therefore, the conversion processing according to the present embodiment can further inhibit degradation in recognition accuracy of the neural network due to the conversion.

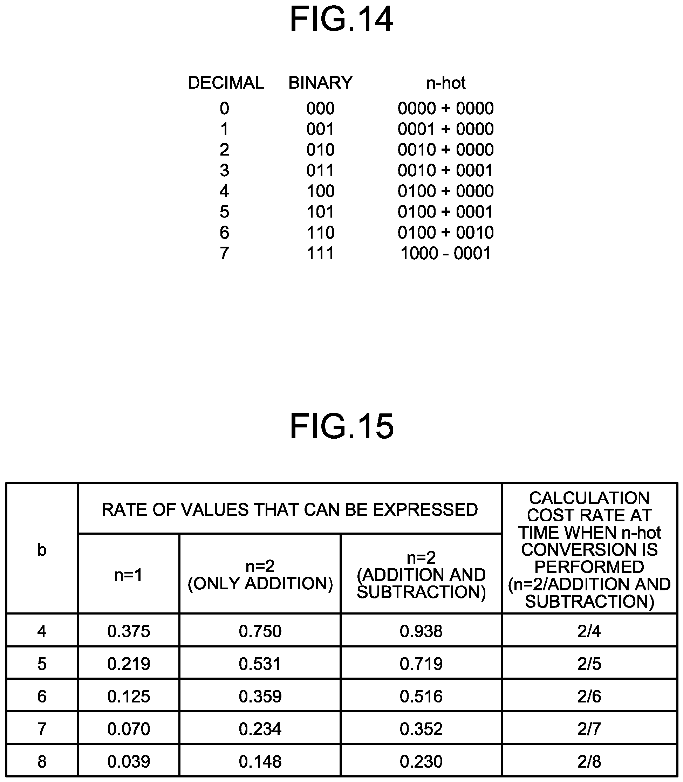

Subsequently, reduction in a calculation amount in conversion processing will be described with reference to FIGS. 14 and 15. FIG. 14 illustrates one example of the conversion processing according to the first embodiment of the present disclosure. FIG. 15 illustrates reduction in a calculation amount in the conversion processing according to the first embodiment of the present disclosure.

FIG. 14 illustrates a case where a binary number of three bits is expressed by an "n-hot" expression of n = 2. As described above, in the "n-hot" expression, a bit string is expressed by addition or subtraction. Therefore, as illustrated in FIG. 14, all binary numbers of three bits can be expressed by the "n-hot" expression.

As described above, the binary numbers of three bits are converted into "n-hot" expressions, so that a calculation amount at the calculation processing unit 122 can be reduced to 2/3 of that before the conversion.

Note that, similarly, all binary numbers of two bits can be expressed by the "n-hot" expression. Furthermore, in a case of four bits or more, as illustrated in FIG. 15, not all values can be expressed by the "n-hot" expression, but the calculation amount can be reduced as compared with that before the conversion.

Here, FIG. 15 illustrates a rate of values that can be expressed in a case where bit strings of binary numbers of b (b = 4 to 8) bits are converted by the conversion processing in the above-described comparative examples (expressed by additions of n = 1 and n = 2) and the embodiment. Furthermore, FIG. 15 illustrates a ratio of a calculation amount (calculation cost) in a case where the weight coefficient A is converted by the conversion processing according to the embodiment.

For example, in the case of four bits (b = 4), the rate of values that can be expressed by n = 1 is "0.375". The rate of values that can be expressed by the conversion processing according to the embodiment, that is, the rate of values that can be expressed by addition and subtraction of n = 2 is "0.938". Furthermore, in the case of four bits, the calculation cost (calculation amount) rate at the time when n-hot conversion is performed by the conversion processing according to the embodiment is 2/4 as compared with that in a case where no n-hot conversion is performed.

Furthermore, in the case of eight bits (b = 8), the rate of values that can be expressed by n = 1 is "0.039". The rate of values that can be expressed by the conversion processing according to the embodiment, that is, the rate of values that can be expressed by addition and subtraction of n = 2 is "0.230". Furthermore, in the case of eight bits, the calculation cost (calculation amount) rate at the time when n-hot conversion is performed by the conversion processing according to the embodiment is 2/8 as compared with that in a case where no n-hot conversion is performed.

As described above, the smaller number of bits increases the rate of values that can be expressed by the conversion processing according to the embodiment. The large number of bits reduces the rate of values that can be expressed by the conversion processing according to the embodiment, but can inhibit reduction in the rate as compared with those in the comparative examples.

Furthermore, the calculation cost (calculation amount) can be further reduced by converting the weight coefficient A into an "n-hot" expression by the conversion processing according to the embodiment.

As described above, the information processing apparatus 10 according to the first embodiment can further reduce the calculation cost while further inhibiting degradation in accuracy by converting the weight coefficient A into an "n-hot" expression.

<<3. Second Embodiment>>

Although, in the above-described first embodiment, the information processing apparatus 10 performs calculation of a neural network by converting the weight coefficient A into an "n-hot" expression, this is not a limitation. For example, the information processing apparatus 10 may perform the calculation by using the weight coefficient A preliminarily expressed by an "n-hot" expression. A method using a weight coefficient preliminarily subjected to the "n-hot" conversion will be described in a second embodiment.

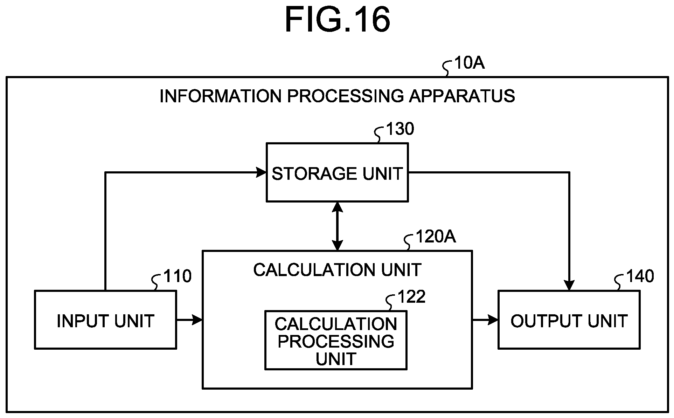

FIG. 16 is a block diagram illustrating a functional configuration example of an information processing apparatus 10A according to the second embodiment of the present disclosure. The information processing apparatus 10A in FIG. 16 has a configuration similar to that of the information processing apparatus 10 in FIG. 5 except that a calculation unit 120A does not include the conversion unit 121.

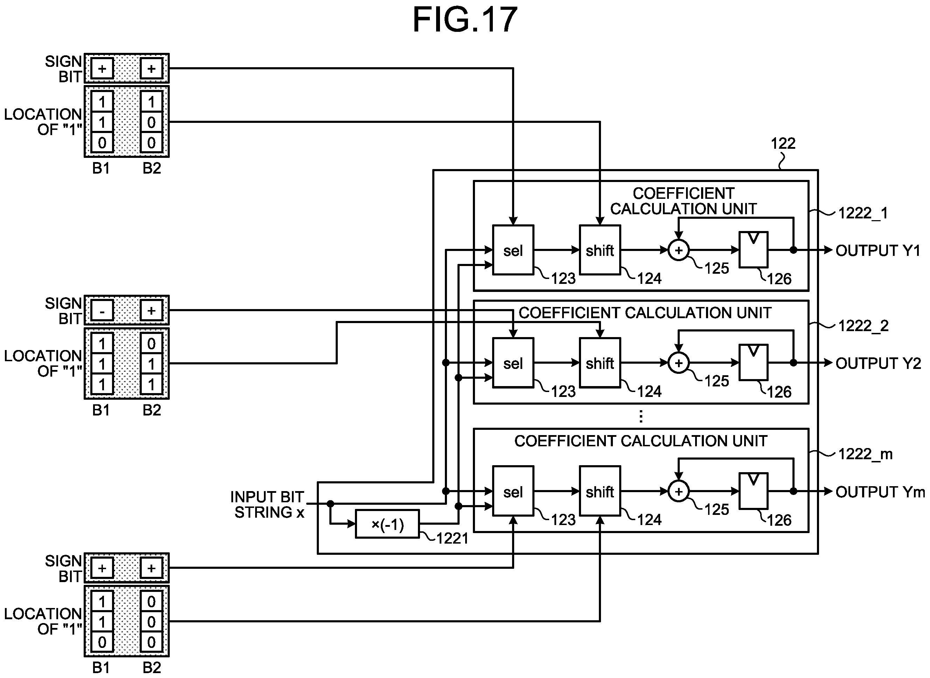

FIG. 17 illustrates a configuration example of the calculation unit 120A according to the second embodiment of the present disclosure. The calculation unit 120A in FIG. 17 does not include the conversion unit 121. A signal representing a bit string B1 and a bit string B2, which are "n-hot" expressions of a weight coefficient A, is input from, for example, the storage unit 130 to the coefficient calculation unit 1222. For example, a signal indicating a sign bit of the bit string B1 and a signal indicating a location of "1" of the bit string B1 are input to the coefficient calculation unit 1222.

Note that, for example, the weight coefficient A may be preliminarily expressed by an "n-hot" expression when a model of the neural network is generated, or may be converted into the "n-hot" expression and stored when the model is stored in the information processing apparatus 10A.

Furthermore, although, here, a signal representing the bit string B1 and the bit string B2, which are "n-hot" expressions of the weight coefficient A, is input from the storage unit 130 to the coefficient calculation unit 1222, this is not a limitation. For example, the storage unit 130 may store the bit string B1 and the bit string B2. The calculation unit 120A may search the bit string B1 and the bit string B2 for a sign bit and a location of "1". In this case, the calculation unit 120A includes, for example, the search unit 1212 in FIG. 6.

As described above, processing of performing "n-hot" conversion on the weight coefficient A can be reduced and a processing load on the information processing apparatus 10A can be further reduced by performing calculation by using the weight coefficient A preliminarily subjected to the "n-hot" conversion.

<<4. Third Embodiment>>

Although, in the above-described first and second embodiments, the information processing apparatuses 10 and 10A convert the weight coefficient A into an "n-hot" expression, this is not a limitation. For example, the information processing apparatuses 10 and 10A may convert an input bit string x into an "n-hot" expression. A method of converting the input bit string x into the "n-hot" expression as described above will be described in a third embodiment.

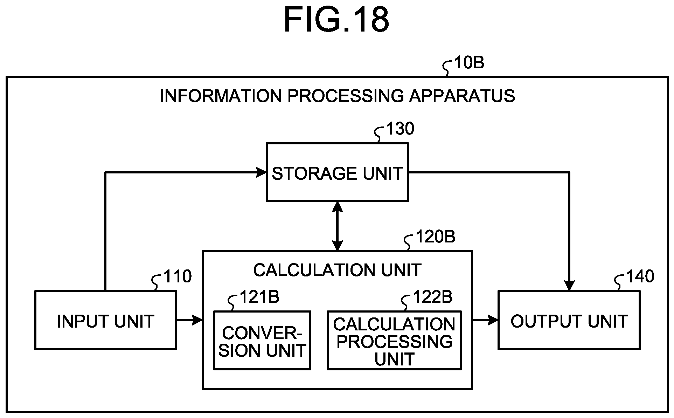

FIG. 18 is a block diagram illustrating a functional configuration example of an information processing apparatus 10B according to the third embodiment of the present disclosure. The information processing apparatus 10B in FIG. 18 has a configuration similar to that of the information processing apparatus 10 in FIG. 5 except that a calculation unit 120B thereof includes a conversion unit 121B and a calculation processing unit 122B.

The conversion unit 121B converts the input bit string x into an "n-hot" quantization value. The calculation processing unit 122B calculates the input bit string x converted into the "n-hot" expression and the weight coefficient A, and outputs a calculation result.

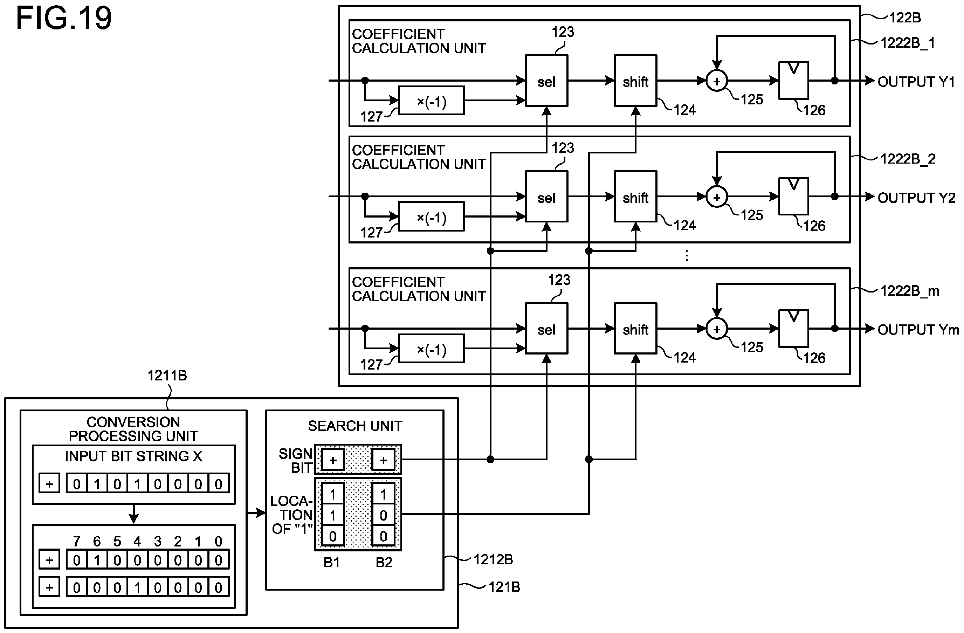

FIG. 19 illustrates a configuration example of the calculation unit 120B according to the third embodiment of the present disclosure. As illustrated in FIG. 19, the calculation unit 120B includes the conversion unit 121B and the calculation processing unit 122B.

The conversion unit 121B includes a conversion processing unit 1211B and a search unit 1212B. The conversion processing unit 1211B performs conversion processing of performing "n-hot" conversion on the input bit string x, and generates two first bit strings (bit string B1 and bit string B2). For example, in the example of FIG. 19, the conversion processing unit 1211B decomposes the input bit string x "01010000" into the bit string B1 "01000000" and the bit string B2 "00010000", and expresses the result.

The search unit 1212B searches for sign bits of the bit strings B1 and B2 and locations of "1" included in the bit strings B1 and B2, and outputs a search result to a coefficient calculation unit 1222B.

Note that the processing in the conversion unit 121B is the same as the processing in the conversion unit 121 except that the processing is performed on the input bit string x.

The calculation processing unit 122B includes coefficient calculation units 1222B 1 to 1222 m in the number corresponding to the number of weight coefficients A1 to Am to be calculated. The coefficient calculation unit 1222B has the same functional configuration as the coefficient calculation unit 1222 in FIG. 6 except that a sign inversion unit 127 is provided.

The sign inversion unit 127 has a function of inverting a sign of the weight coefficient A. Note that the sign inversion unit 127 has the same function as the sign inversion unit 1221 in FIG. 6 except that the bit string whose sign is to be inverted is the weight coefficient A.

The selection unit 123 selects one of the weight coefficient A and a weight coefficient obtained by inverting a sign (also referred to as sign inverted weight coefficient) in accordance with a signal related to a sign bit output from the search unit 1212B. The shift calculation unit 124 multiplies the bit string selected by the selection unit 123 by the input bit string x expressed in an "n-hot" expression.

The addition unit 125 adds a result of multiplication performed by the shift calculation unit 124 at the previous time and a result of multiplication performed by the shift calculation unit 124 at the current time. The delay unit 126 holds the addition result from the addition unit 125 until the next time.

As described above, also in a case where the conversion unit 121B converts the input bit string x into an "n-hot" expression, similarly to the first embodiment, calculation of the weight coefficient A and the input bit string x can be performed. A calculation amount can be further reduced while degradation in accuracy is inhibited.

<<5 . Hardware Configuration Example>>

Next, hardware configuration examples of the information processing apparatuses 10, 10A, and 10B according to the embodiments of the present disclosure will be described. Although the hardware configuration example of the information processing apparatus 10 according to the first embodiment will be described below, the same applies to the other embodiments.

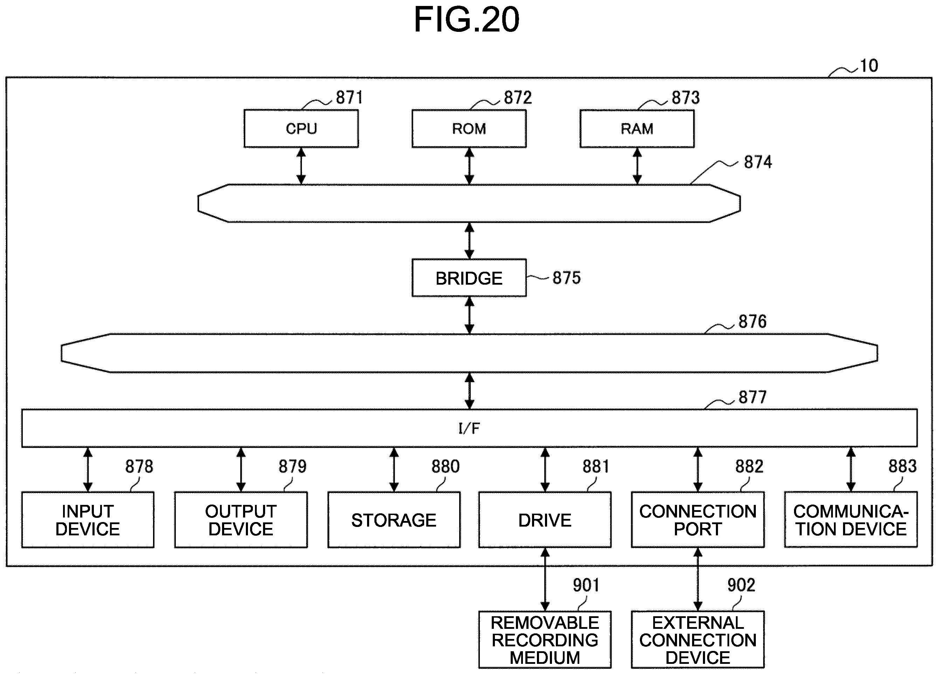

FIG. 20 is a block diagram illustrating the hardware configuration example of the information processing apparatus 10 according to the technology of the present disclosure. Referring to FIG. 20, the information processing apparatus 10 includes, for example, a CPU 871, a ROM 872, a RAM 873, a host bus 874, a bridge 875, an external bus 876, an interface 877, an input device 878, an output device 879, a storage 880, a drive 881, a connection port 882, and a communication device 883. Note that the hardware configuration illustrated here is one example, and some of the components may be omitted. Furthermore, components other than the components illustrated here may be further included.

(CPU 871)

The CPU 871 functions as, for example, a calculation processing device or a control device, and controls the overall or part of the operation of each component based on various programs recorded in the ROM 872, the RAM 873, the storage 880, or a removable recording medium 901.

(ROM 872, RAM 873)

The ROM 872 is a device that stores a program read by the CPU 871, data used for calculation, and the like. The RAM 873 temporarily or permanently stores, for example, a program read by the CPU 871, various parameters that appropriately change at the time of execution of the program, and the like.

(Host Bus 874, Bridge 875, External Bus 876, Interface 877)

The CPU 871, the ROM 872, and the RAM 873 are mutually connected via, for example, the host bus 874 capable of high-speed data transmission. In contrast, the host bus 874 is connected to the external bus 876 having a relatively low data transmission speed via the bridge 875, for example. Furthermore, the external bus 876 is connected to various components via the interface 877.

(Input Device 878)

For example, a mouse, a keyboard, a touch panel, a button, a switch, and a lever are used as the input device 878. Moreover, a remote controller (hereinafter, remote) capable of transmitting a control signal by using infrared rays or other radio waves may be used as the input device 878. Furthermore, the input device 878 includes a voice input device such as a microphone.

(Output Device 879)

The output device 879 is a device capable of visually or audibly notifying a user of acquired information, such as a display device including a cathode ray tube (CRT), an LCD, and an organic EL, an audio output device including a speaker and a headphone, a printer, a mobile phone, and a facsimile. Furthermore, the output device 879 according to the present disclosure includes various vibration devices capable of outputting tactile stimulation.

(Storage 880)

The storage 880 is a device for storing various pieces of data. Examples of the storage 880 include a magnetic storage device such as a hard disk drive (HDD), a semiconductor storage device, an optical storage device, and a magneto-optical storage device.

(Drive 881)

The drive 881 is a device that reads information recorded on the removable recording medium 901 such as a magnetic disk, an optical disk, a magneto-optical disk, and a semiconductor memory, or writes information to the removable recording medium 901.

(Removable Recording Medium 901)

The removable recording medium 901 includes, for example, a DVD medium, a Blu-ray (registered trademark) medium, an HD DVD medium, and various semiconductor storage media. Of course, the removable recording medium 901 may be, for example, an IC card mounted with a non-contact IC chip or an electronic device.

(Connection Port 882)

The connection port 882 connects an external connection device 902. The connection port 882 includes, for example, a universal serial bus (USB) port, an IEEE 1394 port, a small computer system interface (SCSI), an RS-232C port, and an optical audio terminal.

(External Connection Device 902)

The external connection device 902 includes, for example, a printer, a portable music player, a digital camera, a digital video camera, and an IC recorder.

(Communication Device 883)

The communication device 883 is a communication device for connection to a network. The communication device 883 includes, for example, a wired or wireless LAN, Bluetooth (registered trademark), a communication card for wireless USB (WUSB), a router for optical communication, a router for an asymmetric digital subscriber line (ADSL), and a modem for various communications.

<<6. Conclusion>>

Although the embodiments of the present disclosure have been described above, the technical scope of the present disclosure is not limited to the above-described embodiments as it is, and various modifications can be made without departing from the gist of the present disclosure. Furthermore, components of different embodiments and variations may be appropriately combined.

Furthermore, the effects in the embodiments described in the present specification are merely examples and not limitations. Other effects may be exhibited.

Note that the present technology can also have the configurations as follows.

(1) An information processing apparatus comprising

a calculation unit that performs integration of an input valuae and a weight coefficient,
wherein any one of the input value and the weight coefficient is expressed by a combination of addition or subtraction of n or less first bit strings, and
the first bit string includes one bit of 1.

(2) The information processing apparatus according to (1) or (2), wherein any one of the input value and the weight coefficient is expressed by one or two first bit strings.

(3) The information processing apparatus according to claim 1, further comprising a conversion unit that converts any one of the input value and the weight coefficient into a combination of the first bit strings.

(4) The information processing apparatus according to any one of (1) to (3),
wherein the calculation unit further includes:

a shift calculation unit that performs shift calculation on another of the input value and the weight coefficient in accordance with a location of 1 included in the first bit strings; and
an addition/subtraction processing unit that performs addition or subtraction of a calculation result from the shift calculation unit.

(5) The information processing apparatus according to (4),

wherein the calculation unit further includes a selection unit that selects another of the input value and the weight coefficient when the combination includes the first bit string to be added and that selects a value obtained by inverting signs of the input value and the weight coefficient when the combination includes the first bit string to be subtracted, and
the shift calculation unit performs shift calculation on a value selected by the selection unit.

(6) The information processing apparatus according to any one of (1) to (5), wherein the input value is expressed by the combination of the first bit strings.

(7) The information processing apparatus according to any one of (1) to (5), wherein the weight coefficient is expressed by the combination of the first bit strings.

(8) An information processing method comprising

performing integration of an input value and a weight coefficient,
wherein any one of the input value and the weight coefficient is expressed by a combination of addition or subtraction of n or less first bit strings, and
the first bit string includes one bit of 1.

(9) An information processing program causing a computer to execute

performing integration of an input value and a weight coefficient,
wherein any one of the input value and the weight coefficient is expressed by a combination of addition or subtraction of n or less first bit strings, and
the first bit string includes one bit of 1.

Reference Signs List

10, 10A, 10B INFORMATION PROCESSING APPARATUS

110 INPUT UNIT

120 CALCULATION UNIT

130 STORAGE UNIT

140 OUTPUT UNIT

121 CONVERSION UNIT

122 CALCULATION PROCESSING UNIT

123 SELECTION UNIT

124 SHIFT CALCULATION UNIT

125 ADDITION UNIT

126 DELAY UNIT

127, 1221 SIGN INVERSION UNIT

1211_1 to 1211_m CONVERSION PROCESSING UNIT

1212_1 to 1212_m SEARCH UNIT

1222_1 to 1222_m COEFFICIENT CALCULATION UNIT

**Claims**

1. An information processing apparatus comprising

a calculation unit that performs integration of an input value and a weight coefficient,
wherein any one of the input value and the weight coefficient is expressed by a combination of addition or subtraction of n or less first bit strings, and
the first bit string includes one bit of 1.

2. The information processing apparatus according to claim 1, wherein any one of the input value and the weight coefficient is expressed by one or two first bit strings.

3. The information processing apparatus according to claim 1, further comprising a conversion unit that converts any one of the input value and the weight coefficient into a combination of the first bit strings.

4. The information processing apparatus according to claim 1,
   wherein the calculation unit further includes:

   a shift calculation unit that performs shift calculation on another of the input value and the weight coefficient in accordance with a location of 1 included in the first bit strings; and
   an addition/subtraction processing unit that performs addition or subtraction of a calculation result from the shift calculation unit.

5. The information processing apparatus according to claim 4,

   wherein the calculation unit further includes a selection unit that selects another of the input value and the weight coefficient when the combination includes the first bit string to be added and that selects a value obtained by inverting signs of the input value and the weight coefficient when the combination includes the first bit string to be subtracted, and
   the shift calculation unit performs shift calculation on a value selected by the selection unit.

6. The information processing apparatus according to claim 1, wherein the input value is expressed by the combination of the first bit strings.

7. The information processing apparatus according to claim 1, wherein the weight coefficient is expressed by the combination of the first bit strings.

8. An information processing method comprising

   performing integration of an input value and a weight coefficient,
   wherein any one of the input value and the weight coefficient is expressed by a combination of addition or subtraction of n or less first bit strings, and
   the first bit string includes one bit of 1.

9. An information processing program causing a computer to execute

   performing integration of an input value and a weight coefficient,
   wherein any one of the input value and the weight coefficient is expressed by a combination of addition or subtraction of n or less first bit strings, and
   the first bit string includes one bit of 1.

# FIG.1

# FIG.2

# FIG.3

+ | 0 | 0 | 0 | 1 | 0 | 0 | 1 | 0 | ⇨ + | 0 | 0 | 0 | 1 | 0 | 0 | 0 | 0 |   + | 0 | 0 | 0 | 0 | 0 | 0 | 1 | 0 |

+ | 0 | 0 | 0 | 0 | 1 | 1 | 1 | 0 | ⇨ + | 0 | 0 | 0 | 1 | 0 | 0 | 0 | 0 |   - | 0 | 0 | 0 | 0 | 0 | 0 | 1 | 0 |

# FIG.4

```
   1  0  0  0  0  0  0  0                    1  0  0  0  0  0  0  0
 × 0  0  0  0  0  0 [1] 0                   × 0  0  0 [1] 0  0  0  0
 _____                        _____
```

| 1 | 0 | 0 | 0 | 0 | 0 | 0 |

**+**

| 1 | 0 | 0 | 0 | 0 | 0 | 0 |

TWO SHIFT CALCULATIONS

# FIG.5

INFORMATION PROCESSING APPARATUS 10

STORAGE UNIT 130

CALCULATION UNIT 120

INPUT UNIT 110

CONVER-SION UNIT 121

CALCULATION PROCESSING UNIT 122

OUTPUT UNIT 140

FIG.6

# FIG.7

| **Algorithm 1** Forward and backward procedure for a "$n$-hot" quantized convolution layer |
|---|
| **Input**: pre-trained weight $w$, bit width $b$, the input activations $x_{in}$ |
| **Output**: the output activations $x_{out}$ |
|    **Forward** |
| 1: Quantize $w$ by fixed-point method $w_q = Q_{fixed-point}(w)$ |
| 2: Get clip value of $w$, $\alpha$ |
| 3: Normalize $w_q$ to $\overline{w_q}$ |
| 4: Project $\overline{w_q}$ to $n$-hot quantized values $w_{n-hot} = \Pi_{Q_{n-hot(\alpha,b,n)}}(\overline{w_q})$ |
| 5: Compute the output activations $x_{out}=convolution(w_{n-hot}, x_{in})$ |
|    **Backward** |
| 6: Compute the loss $\mathcal{L}$ |
| 7: Compute the gradient with straight-through estimator (STE) $\dfrac{\partial \mathcal{L}}{\partial x_{out}}$ |
| 8: Update $w$ with learning rate $\eta$ |

# FIG.8

```
            ┌──────────┐
            │  START   │
            └────┬─────┘
                 │           ⌐S101
        ┌────────▼───────────────┐
        │ DETECT BIT VALUE OF MSB │
        └────────┬───────────────┘
                 │           ⌐S102
             ◇ IS DETECTED ◇────NO───┐
             ◇ BIT VALUE "0"? ◇      │
                 │ YES              ⌐S103
                 │          ┌──────────────────┐
                 │          │ COUNT NUMBER OF 1 │
            ⌐S104│          └────────┬─────────┘
         ◇ HAVE THREE ◇──NO──────────┤
         ◇ OR MORE "1" BEEN ◇        │   ⌐S105
         ◇ COUNTED? ◇         YES ◇ HAS BEEN ◇
                 │ YES            ◇ SCANNED TO ◇
                 │                ◇ END? ◇
                 │                    │ NO    ⌐S106
          ⌐S107  │           ┌──────────────────┐
   YES ◇ ARE "1" CONTINUOUS? ◇  │ DETECT ONE-LEVEL │
        │        │              │ LOWER BIT VALUE  │
   ⌐S109│        │ NO           └──────────────────┘
┌────────────┐   │
│ PERFORM    │   │     ⌐S110
│ CONVERSION │ ┌──────────────────────┐
│ INTO       │ │ PERFORM REPLACEMENT  │
│ SUBTRACTION│ │ WITH "0"             │
│ EXPRESSION │ └──────────┬───────────┘
└──────┬─────┘            │
 ⌐S108 │                  │
┌──────▼──────────────────▼──┐
│ PERFORM CONVERSION INTO    │
│ ADDITION EXPRESSION        │
└────────────┬───────────────┘
        ┌────▼─────┐
        │   END    │
        └──────────┘
```

# FIG.9

MSB

| 0 | 0 | 1 | 1 | 1 | 0 | 0 | 1 |
|---|---|---|---|---|---|---|---|

———————————▶

# FIG.10

| BINARY NUMBER | DECIMAL NUMBER | ROUNDED VALUE |
|---|---|---|
| 01010000 | 80 | 80 |
| 01010001 | 81 | 80 |
| | ⋮ | |
| 01010111 | 87 | 80 |
| 01011000 | 88 | 80/96 |
| 01011001 | 89 | 96 |
| | ⋮ | |
| 01011111 | 95 | 96 |
| 01100000 | 96 | 96 |

# FIG.11

# FIG.12

# FIG.13

# FIG.14

| DECIMAL | BINARY | n-hot |
|---------|--------|-------|
| 0 | 000 | 0000 + 0000 |
| 1 | 001 | 0001 + 0000 |
| 2 | 010 | 0010 + 0000 |
| 3 | 011 | 0010 + 0001 |
| 4 | 100 | 0100 + 0000 |
| 5 | 101 | 0100 + 0001 |
| 6 | 110 | 0100 + 0010 |
| 7 | 111 | 1000 - 0001 |

# FIG.15

| b | RATE OF VALUES THAT CAN BE EXPRESSED | | | CALCULATION COST RATE AT TIME WHEN n-hot CONVERSION IS PERFORMED (n=2/ADDITION AND SUBTRACTION) |
|---|------|------|------|------|
| | n=1 | n=2 (ONLY ADDITION) | n=2 (ADDITION AND SUBTRACTION) | |
| 4 | 0.375 | 0.750 | 0.938 | 2/4 |
| 5 | 0.219 | 0.531 | 0.719 | 2/5 |
| 6 | 0.125 | 0.359 | 0.516 | 2/6 |
| 7 | 0.070 | 0.234 | 0.352 | 2/7 |
| 8 | 0.039 | 0.148 | 0.230 | 2/8 |

# FIG.16

INFORMATION PROCESSING APPARATUS — 10A

STORAGE UNIT — 130

CALCULATION UNIT — 120A

INPUT UNIT — 110

CALCULATION PROCESSING UNIT — 122

OUTPUT UNIT — 140

# FIG.17

EP 4 296 903 A1

# FIG.18

10B

INFORMATION PROCESSING APPARATUS

130

STORAGE UNIT

120B

CALCULATION UNIT

110

INPUT UNIT

121B

CONVER-
SION UNIT

122B

CALCULATION
PROCESSING
UNIT

140

OUTPUT UNIT

FIG.19

# FIG.20

EP 4 296 903 A1

## INTERNATIONAL SEARCH REPORT

International application No.

**PCT/JP2022/002493**

### A. CLASSIFICATION OF SUBJECT MATTER

*G06N 3/063*(2006.01)i; *G06F 7/533*(2006.01)i
FI:  G06N3/063; G06F7/533

According to International Patent Classification (IPC) or to both national classification and IPC

### B. FIELDS SEARCHED

Minimum documentation searched (classification system followed by classification symbols)

G06N3/00-99/00; G06F7/52-7/533

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

IEEE Xplore

### C. DOCUMENTS CONSIDERED TO BE RELEVANT

| Category* | Citation of document, with indication, where appropriate, of the relevant passages | Relevant to claim No. |
|---|---|---|
| A | WO 2018/212946 A1 (QUALCOMM INCORPORATED) 22 November 2018 (2018-11-22) paragraph [0072] | 1-9 |
| A | WO 2007/034366 A2 (KONINKLIJKE PHILIPS ELECTRONICS N.V.) 29 March 2007 (2007-03-29) page 9, lines 16-18 | 1-9 |

☐ Further documents are listed in the continuation of Box C.       ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 April 2022 | 19 April 2022 |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2022/002493**

| Patent document cited in search report | | | Publication date (day/month/year) | Patent family member(s) | | | Publication date (day/month/year) |
|---|---|---|---|---|---|---|---|
| WO | 2018/212946 | A1 | 22 November 2018 | US | 2018/0336469 | A1 | |
| | | | | paragraph [0072] | | | |
| WO | 2007/034366 | A2 | 29 March 2007 | US | 2009/0219983 | A1 | |
| | | | | paragraph [0048], lines 9-12 | | | |
| | | | | EP | 1938537 | A2 | |
| | | | | CN | 101283560 | A | |
| | | | | TW | 200729857 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAISUKE MIYASHITA.** Convolutional Neural Networks using Logarithmic Data Representation. *arXiv,* 03 March 2016, https://arxiv.org/pdf/1603.01025.pdf
- **VANHOUCKE, V. ; SENIOR, A. ; MAO, M. Z.** *Improving the speed of neural networks on CPUs,* 2011
- **ZHOU, A. ; YAO, A. ; GUO, Y. ; XU, L. ; CHEN, Y.** Incremental network quantization: Towards lossless cnns with low-precision weights. *arXiv preprint arXiv:1702.03044,* 2017
- Lognet: Energy-efficient neural networks using logarithmic computation. **LEE, E. H. ; MIYASHITA, D. ; CHAI, E. ; MURMANN, B. ; WONG, S. S.** 2017 IEEE International Conference on Acoustics, Speech and Signal Processing (ICASSP). IEEE, March 2017, 5900-5904
- **VOGEL, S. ; LIANG, M. ; GUNTORO, A. ; STECHELE, W. ; ASCHEID, G.** Efficient hardware acceleration of cnns using logarithmic data representation with arbitrary log-base. *Proceedings of the International Conference on Computer-Aided Design,* November 2018, 1-8
- **LI, Y. ; DONG, X. ; WANG, W.** Additive Powers-of-Two Quantization: An Efficient Non-uniform Discretization for Neural Networks. *International Conference on Learning Representations,* September 2019